## Europäisches Patentamt
## European Patent Office
## Office européen des brevets

(19)

(11) Numéro de publication: **0 050 537 B1**

(12) **FASCICULE DE BREVET EUROPEEN**

(45) Date de publication du fascicule du brevet:
**12.09.84**

(51) Int. Cl.³: **B 62 M 9/00, F 16 H 7/06**

(21) Numéro de dépôt: **81401451.0**

(22) Date de dépôt: **18.09.81**

(54) **Dispositif de transmission à lien sans fin et son application à un véhicule à deux roues.**

(30) Priorité: **20.10.80 FR 8022386**

(43) Date de publication de la demande:
**28.04.82 Bulletin 82/17**

(45) Mention de la délivrance du brevet:
**12.09.84 Bulletin 84/37**

(84) Etats contractants désignés:
**AT BE CH DE GB IT LI LU NL SE**

(56) Documents cités:
**DE - A - 2 338 865**
**FR - A - 1 038 559**
**US - A - 2 099 220**

(73) Titulaire: **CYCLES PEUGEOT Société dite:, Beaulieu, F-25700 Valentigney (FR)**

(72) Inventeur: **De Verchere, Bernard, 2, Rue des Moulins, F-21000 Dijon (FR)**

(74) Mandataire: **Polus, Camille et al, c/o Cabinet Lavoix 2, Place d'Estienne d'Orves, F-75441 Paris Cedex 09 (FR)**

ACTORUM AG

## Description

La présente invention concerne les dispositifs de transmission du type comprenant un lien ou organe flexible sans fin tel que chaîne ou courroie, coopérant avec deux organes rotatifs respectivement menant et mené.

Dans la disposition classique de ces dispositifs de transmission, les deux organes menant et mené se trouvent à l'intérieur du lien sans fin qui enveloppe par conséquent chacun de ces deux organes sur un angle qui est de l'ordre de 180°. Dans une application bien connue de tels dispositifs sont utilisés pour réaliser l'entraînement de la roue arrière motrice d'un véhicule à deux roues, et en particulier d'un tel véhicule à moteur. Or, dans certaines cas, et notamment si ce véhicule est à propulsion électrique, le poids important qui résulte de la présence des batteries d'accumulateurs, rend beaucoup plus difficile le démontage de la roue arrière. Il est en effet difficile de soulever le véhicule pour enlever la roue et dégager le pignon mené de sa chaîne d'entraînement.

On connaît également (US-A-2 099 220), mais dans une application tout à fait différente, un agencement dans lequel une chaîne suit un trajet relativement compliqué et passe sur plusieurs pignons dont l'un se trouve en dehors de la courbe délimitée par cette chaîne. Ce document ne fournit cependant pour autant aucun enseignement permettant de résoudre le problème évoqué ci-dessus.

Le but de cette invention est par conséquent de proposer un dispositif de transmission du type comprenant un organe flexible sans fin coopérant avec deux organes rotatifs respectivement menant et mené dont l'un au moins est disposé à l'extérieur de la courbe délimitée par l'organe flexible sans fin, ce dernier passant autour d'organes de guidage et de renvoi et qui, appliqué à un véhicule, permette de simplifier dans une très large mesure l'opération de montage ou de démontage d'une roue.

A cet effet, un tel dispositif est caractérisé en ce que les deux organes rotatifs menant et mené sont disposés à l'extérieur de la courbe délimitée par l'organe flexible sans fin et il est prévu deux organes de guidage et de renvoi disposés respectivement au voisinage des organes menant et mené, de telle façon que l'angle d'enveloppement de l'organe flexible sur chacun desdits organes menant et mené soit suffisant pour assurer une transmission correcte.

Suivant d'autres caractéristiques:
- les organes de guidage et de renvoi sont des galets articulés sur le cadre ou le châssis d'un véhicule auquel le dispositif est associé;
- au moins l'un des deux organes de guidage et de renvoi constitue un tendeur.

L'invention a également pour objet un véhicule équipé d'un tel dispositif.

Suivant une caractéristique particulièrement avantageuse, ce véhicule comporte un ensemble garde-boue porte-bagages, articulé sur le cadre, permettant de dégager plus aisément la roue arrière.

L'invention va être décrite plus en détail ci-dessous en se référant au dessin annexé sur le quel:

la fig. 1 est un schéma de réalisation d'un dispositif suivant l'invention;

la fig. 2 est une vue en élévation latérale d'un véhicule comportant un ensemble garde-boue porte-bagages articulé sur le cadre.

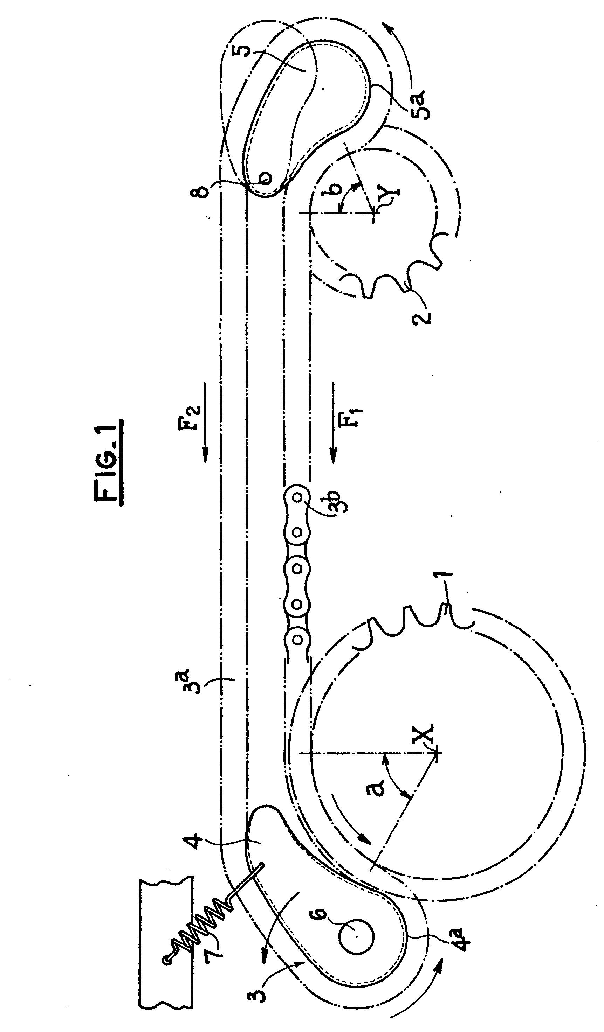

On voit sur la fig. 1 deux organes respectivement menant et mené constitués par des pignons 1, 2 montés rotatifs autour d'axes parallèles X-Y. Ces deux pignons coopèrent avec un lien ou organe flexible sans fin constitué ici par une chaîne 3. Les deux pignons sont disposés à l'extérieur de la courbe délimitée par la chaîne et cette dernière est guidée par deux galets de guidage et de renvoi 4, 5. Le premier 4 de ces galets est disposé au voisinage de la partie avant du pignon menant et il est articulé autour d'un axe 6 sur le cadre ou châssis du véhicule. Cet axe 6 est situé à peu près au centre de la zone de renvoi $4^a$, qui comporte une partie circulaire, s'étendant sur un arc supérieur à 180°. Il est de préférence sollicité par un ressort 7 pour constituer un galet tendeur du brin supérieur $3^a$ da la chaîne.

Le deuxième galet 5 disposé au voisinage de la partie supérieure arrière du pignon mené est également articulé sur le cadre ou châssis du véhicule, son axe d'articulation 8 étant situé entre les brins horizontaux $3^a$, $3^b$ de la chaîne. L'axe 8 est situé dans une zone éloignée de la zone de guidage à peu près circulaire $5^a$, qui s'étend également sur un angle supérieur à 180°.

Les termes «avant» et «arrière» sont utilisés ici en supposant que le dispositif de transmission équipe un véhicule dont la partie avant se trouverait à gauche en considérant le dessin.

La position et la forme des galets 4, 5 sont choisies de telle façon que l'angle d'enveloppement $\underline{a}$, $\underline{b}$ de la chaîne sur chacun des deux pignons menant et mené soit compris entre 60 et 90° environ, cette plage de valeurs n'étant cependant pas limitative, De plus, ces galets comportent de préférence une gorge en U, le long de leur périphérie pour assurer un guidage correct de la chaîne.

Le fonctionnement d'un tel dispositif est le suivant: lorsque le pignon menant 1 est entraîné dans le sens contraire à celui des aiguilles d'une montre, la chaîne est entraînée suivant la flèche F1. La force qui s'exerce sur le galet de guidage 5 sous l'effort de la tension exercée dans le brin $3^b$ de la chaîne est telle que ce galet tend à basculer vers le bas, c'est à dire en direction du pignon mené, de sorte que la chaîne est maintenue appliquée ssur ce pignon qui se trouve par conséquent entraîné.

Par contre, si l'utilisateur entraîne le pignon menant dans le sens des aiguilles d'une montre, la chaîne est entraînée suivant la flèche F2 et la force qui s'exerce sur le galet de renvoi 5 sous l'effet de la tension dans le brin $3^a$ provoque le basculement de ce galet vers le haut autour de son axe d'articulation, ce galet prenant alors la position représentée en trait mixte sur la fig. 1. Dans cette position le pignon mené se trouve dégagé et la roue arrière, après avoir été débloquée, peut alors aisément être dégagée vers l'arrière du véhicule sans qu'il soit pratiquement nécessaire de soulever ce dernier.

On voit donc que le problème posé est parfaitement résolu. Il est à noter de plus que l'angle d'enveloppement de la chaîne sur chacun des deux pignons demeure tout à fait suffisant pour réaliser un entraînement, étant donné que dans les dispositifs classiques, bien que l'angle d'enveloppement soit très supérieur, la partie active de la chaîne ne concerne en fait qu'un nombre limité de dents des pignons, tout à fait comparable à celui qui est concerné dans la présente invention. Par conséquent, le dispositif ne se trouve pas sensiblement effecté quant au rendement de la transmission.

On notera également que la disposition proposée est particulièrement peu encombrante, étant donné que le volume occupé par la chaîne est beaucoup plus faible que dans un agencement classique ce qui facilite la mise en place d'un carter de chaîne et libère un volume important entre les deux pignons.

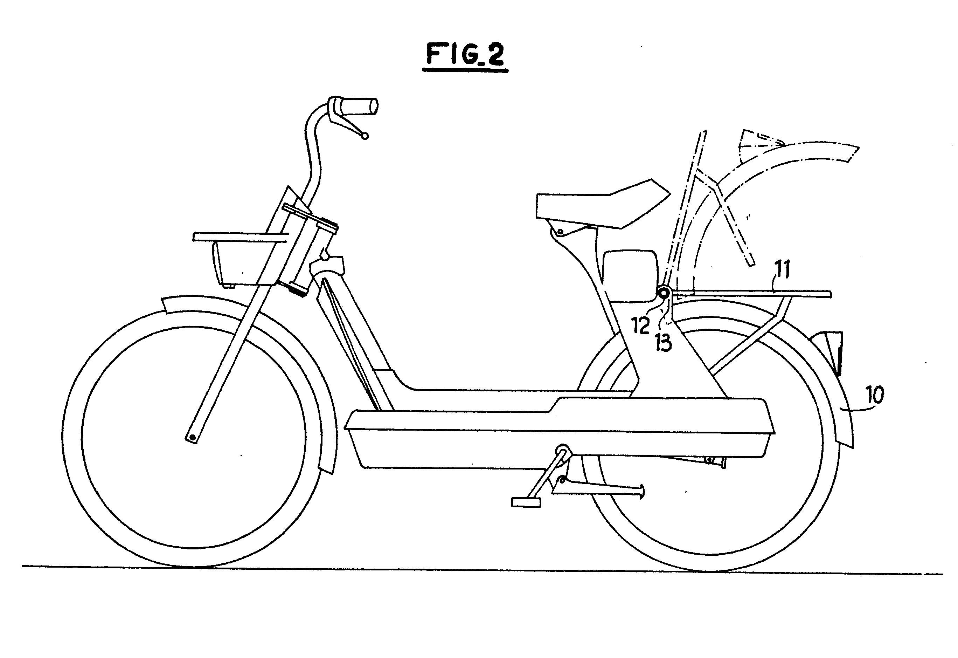

Dans l'application considérée à un véhicule à deux roues motorisé, ce véhicule peut être perfectionné comme représenté à la fig. 2, de façon à comporter un ensemble gardeboue 10 porte-bagages 11, articulé autour d'un axe 12 sur une partie 13 du cadre du véhicule et que peut être soulevé d'un bloc pour permettre de libérer plus aisément la roue arrière. La position de dégagement est représentée en trait mixte sur le dessin.

## Revendications

1. Dispositif de transmission du type comprenant un organe flexible sans fin (3) coopérant avec deux organes rotatifs (1, 2) respectivement menant et mené, dont l'un au moins est disposé à l'extérieur de la courbe délimitée par l'organe flexible sans fin, ce dernier passant autour d'organes de guidage et de renvoi, caractérisé en ce que les deux organes rotatifs menant (1) et mené (2) sont disposés à l'extérieur de la courbe délimitée par l'organe flexible sans fin (3) et il est prévu deux organes de guidage et de renvoi (4, 5) disposés respectivement au voisinage des organes menant et mené (1, 2) de telle façon que l'angle d'enveloppement (a, b) de l'organe flexible (3) sur chacun desdits organes menant et mené (1, 2) soit suffisant pour assurer une transmission correcte.

2. Dispositif suivant la revendication 1, caractérisé en ce que les organes de guidage et de renvoi sont des galets (4, 5) articulés sur le cadre ou châssis du véhicule auquel le dispositif est associé.

3. Dispositif suivant l'une quelconque des revendications 1 et 2, caractérisé en ce que au moins l'un (4) des deux organes de guidage et de renvoi constitue un tendeur.

4. Dispositif suivant l'une quelconque des revendications 1 à 3, caractérisé en ce que l'organe de renvoi (5) associé à l'organe mené (2) est articulé autour d'un axe (8), de façon à basculer en s'éloignant de l'organe mené, lorsque l'organe flexible sans fin est entraîné dans un sens déterminé.

5. Dispositif suivant la revendication 4, caractérisé en ce que l'axe d'articulation (8) de l'organe de renvoi (5) associé à l'organe mené (2) est disposé entre les deux brins horizontaux (3ᵃ, 3ᵇ) de l'organe flexible sans fin.

6. Dispositif suivant l'une quelconque des revendications 4 et 5, caractérisé en ce que l'axe d'articulation (8) de l'organe de renvoi (5) associé à l'organe mené (2) est disposé dans une zone de l'organe de renvoi éloignée d'une zone (5ᵃ) de renvoi de l'organe flexible.

7. Dispositif suivant l'une quelconque des revendications 1 à 3, caractérisé en ce que l'organe de renvoi (4) associé à l'organe menant est articulé autour d'un axe (6) disposé au voisinage d'une zone (4ᵃ) de renvoi de l'organe flexible.

8. Dispositif suivant l'une quelconque des revendications 1 à 7, caractérisé en ce que les organes de renvoi (4, 5) comportent une gorge à section en U, le long de leur périphérie.

9. Véhicule équipé d'un dispositif suivant l'une quelconque des revendications 1 à 8.

10. Véhicule suivant la revendication 9, caractérisé en ce qu'il comporte un ensemble garde-boue (10) porte-bagages (11) articulé sur le cadre et permettant de dégager la roue arriére.

## Patentansprüche

1. Kraftübertragungsvorrichtung mit einem biegsamen Endloselement (3), welches mit einem antreibenden und einem angetriebenen Drehelement (1, 2) zusammenwirkt, von denen wenigstens eines ausserhalb der durch das biegsame Endloselement bestimmten Kurve liegt, wobei dieses um Führungs- und Umlenkelemente läuft, dadurch gekennzeichnet, dass sowohl das antreibende (1) als auch das angetriebene (2) Drehelement ausserhalb der durch das biegsame Endloselement (3) bestimmten Kurve liegt und dass zwei Führungs- und Umlenkelemente (4, 5) vorgesehen sind, welche jeweils in der Nähe des antreibenden und des angetriebenen Elements (1, 2) liegen, derart, dass der Einhüllungswinkel (a, b) des biegsamen Elements (3) auf sowohl dem antreibenden als auch dem angetriebenen Element (1, 2) für eine korrekte Kraftübertragung ausreicht.

2. Vorrichtung nach Anspruch 1, dadurch gekennzeichnet, dass die Führungs- und Umlenkelemente Blöcke (4, 5) sind welche am Rahmen bzw. Chassis des Fahrzeugs, dem die Vorrichtung zugeordnet ist, angelenkt sind.

3. Vorrichtung nach irgendeinem der Ansprüche 1 und 2, dadurch gekennzeichnet, dass wenigstens eines (4) der beiden Führungs- und Umlenkelemente ein Spannglied bildet.

4. Vorrichtung nach irgendeinem der Ansprüche 1 bis 3, dadurch gekennzeichnet, dass das dem angetriebenen Element (2) zugeordnete Umlenkelement (5) derart um eine Achse (8) schwenkbar ist, dass es unter Entfernung vom angetriebenen Element kippt, wenn das biegsame Endloselement in einer bestimmten Richtung angetrieben wird.

5. Vorrichtung nach Anspruch 4, dadurch gekennzeichnet, dass die Schwenkachse (8) des dem angetriebenen Element (2) zugeordneten Umlenkelements (5) zwischen den beiden horizontalen Trümmern (3ᵃ, 3ᵇ) des biegsamen Endloselements angeordnet ist.

6. Vorrichtung nach irgendeinem der Ansprüche 4 u. 5, dadurch gekennzeichnet, dass die Schwenkachse (8) des dem angetriebenen Element (2) zugeordneten Umlenkelements (5) in einem von einem Umlenkbereich (5ᵃ) des biegsamen Elements entfernten Bereich des Umlenkelements angeordnet ist.

7. Vorrichtung nach irgendeinem der Ansprüche 1 bis 3, dadurch gekennzeichnet, dass das dem antreibenden Element zugeordnete Umlenkelement (4) um eine Achse (6) schwenkbar ist, welche in der Nähe eines Umlenkbereichs (4ª) des biegsamen Elements angeordnet ist.

8. Vorrichtung nach irgendeinem der Ansprüche 1 bis 7, dadurch gekennzeichnet, dass die Umlenkelemente (4, 5) eine im Querschnitt U-förmige Kehle längs ihres Umfangs aufweisen.

9. Fahrzeug, welches mit einer Vorrichtung nach irgendeinem der Ansprüche 1 bis 8 ausgestattet ist.

10. Fahrzeug nach Anspruch 9, dadurch gekennzeichnet, dass es einen Aufbau aus Schutzblech (10) und Gepäckträger (11) aufweist, welcher am Rahmen angelenkt ist und ein Abnehmen des Hinterrades gestattet.

## Claims

1. A transmission device of the type comprising an endless flexible element (3) cooperating with two respectively driving and driven elements (1, 2), at least one of which is disposed outside the curve defined by the endless flexible element, the latter extending around guide and mule means, characterised in that the rotary driving element (1) and rotary driven element (2) are disposed outside the curve defined by the endless flexible element (3), and two guide and mule means (4, 5) are provided and disposed respectively in the vicinity of the driving elements (1, 2) so that the angular extent (a, b) to which the flexible element (3) surrounds each of the driving and driven elements (1, 2) is sufficient to ensure a correct transmission.

2. A device according to claim 1, characterised in that the guide and mule means are rollers (4, 5) pivotally mounted on the frame or chassis of the vehicle with which the device is associated.

3. A device according to claim 1 or 2, characterised in that at least one (4) of the two guide and mule means constitutes tensioning means.

4. A device according to any one of the claims 1 to 3, characterised in that the mule means (5) associated with the driven element (2) is mounted to pivot about a pin (8) so as to swing away from the driven element when the endless flexible element is driven in a given direction.

5. A device according to claim 4, characterised in that the pivot pin (8) of the mule means (5) associated with the driven element (2) is disposed between the two horizontal portions (3ª, 3b) of the endless flexible element.

6. A device according to claim 4 or 5, characterised in that the pivot pin (8) of the mule means (5) associated with the driven element (2) is disposed in a region of the mule means remote from a region (5ª) in which the flexible element changes direction.

7. A device according to any one of the claims 1 to 3, characterised in that the mule means (4) associated with the driving element is mounted to pivot about a pin (6) disposed in the vicinity of a region (4ª) in which the flexible element changes direction.

8. A device according to any one of the claims 1 to 7, characterised in that the mule means (4, 5) comprise a U-section groove along their periphery.

9. A vehicle equipped with a device according to any one of the claims 1 to 8.

10. A vehicle according to claim 9, characterised in that it comprises a unit which includes a mudguard (10) and a luggage-carrier (11) and is pivotally mounted on the frame and enables the rear wheel to be directly accessible.

## FIG.1

FIG.2

0 050 537